# EUROPÄISCHE PATENTSCHRIFT

(11) **EP 0 737 613 B1**
(45) Veröffentlichungstag und Bekanntmachung des Hinweises auf die Patenterteilung: **16.09.1998**
(21) Anmeldenummer: 96105523.3
(22) Anmeldetag: 06.04.1996
(51) Int. Cl.: B62D 25/14, B60K 37/00, B62D 25/08

(54) **Lenkungsaufhängung für Kraftfahrzeuge**
Mounting for a steering column for motorcars
Fixation de colonne de direction d'un véhicule automobile

(30) Priorität: 10.04.1995 DE 19513510
(43) Veröffentlichungstag der Anmeldung: 16.10.1996
(73) Patentinhaber: DAIMLER-BENZ AKTIENGESELLSCHAFT, 70567 Stuttgart (DE); MC Micro Compact Car Aktiengesellschaft, 2500 Biel 4 (CH)
(72) Erfinder: Henseler, Wolfgang, 71083 Herrenberg (DE); Fischer, Jan, 72108 Kiebingen (DE); Schick, Uli, 72202 Nagold (DE); Hasenstab, Annette, 70839 Gerlingen (DE)

(56) Entgegenhaltungen:
- DE-C- 872 168
- US-A- 2 978 055
- US-A- 3 376 947
- PATENT ABSTRACTS OF JAPAN vol. 010, no. 357 (M-540), 2.Dezember 1986 & JP-A-61 155032 (HONDA MOTOR CO LTD), 14.Juli 1986,

## Beschreibung

Die Erfindung betrifft eine Lenkungsaufhängung für Kraftfahrzeuge, insbesondere für Personenkraftwagen, bestehend aus einem zwischen den A-Säulen verlaufenden Querträger, der zur Lagerung der Lenksäule dient und an einem unter der Windschutzscheibe verlaufenden Querträger über eine Verbindungsstrebe und am Boden über eine Vertikalstrebe abgestützt und durch ein Armaturenbrett mit einer die Kombiinstrumente aufnehmenden Instrumententafel zum Fahrgastraum hin abgedeckt ist.

Eine Lenkungsaufhängung dieser Art ist aus der FR 26 67 038 A1 bekannt. Bei dieser Bauart ist ein rohrförmiger Querträger zwischen den A-Säulen eingespannt und mit einer Verbindungsstrebe in Form eines gebogenen Vierkantrohres mit dem unterhalb der Windschutzscheibe verlaufenden Querträger verbunden. Die Lenksäule ist an dem ersten Querträger gelagert, der etwa in seiner Mitte durch eine stab- oder rohrförmige Vertikalstrebe im Bereich des Mitteltunnels am Boden des Fahrzeuges abgestützt ist. Von dieser Vertikalstrebe aus ist der Querträger etwas zur Lagerung der Lenksäule hin durchgebogen.

Diese bekannte reine Tragkonstruktion für die Lenksäule, die in der Rohkarosse untergebracht ist, wird anschließend durch ein Armaturenbrett zum Fahrgastraum hin abgedeckt.

Das gilt auch für andere bekannte Bauarten (FR 26 53 087 A1), wo zur Halterung der Lenksäule ebenfalls ein an den A-Säulen angebrachter Querträger vorgesehen ist, der zum Fahrgastraum hin durch ein die Armaturen aufnehmendes Brett oder eine Mittelkonsole abgedeckt ist.

Auch die US-PS 4 826 237 zeigt im Prinzip die gleiche Konstruktion, nur daß hier, weil zwei mittlere Vertikalstreben vorgesehen sind, auf eine Verbindungsstrebe von dem die Lenksäule tragenden Querträger zu dem vor der Windschutzscheibe sitzenden Querträger verzichtet worden ist.

Die US 2 978 055 A beschreibt eine Verstärkungsanordnung für Fahrzeuge mit einer sogenannten Panoramawindschutzscheibe. Dort hat man die beiden Schenkel eines U-förmig gewölbten Windschutzscheibenrahmens durch einen Querträger verbunden, der für erhöhte Stabilität sorgt und man hat an diesem Querträger eine Steuereinheit angebracht, die gleichzeitig als Lagerung für die Lenksäule dienen kann. Diese Steuereinheit kann aufgrund dieser Ausbildung an dem Querträger dort angebracht werden, wo die Lenksäule erwünscht ist, so daß die gleiche Bauart für Fahrzeuge mit Rechts- oder Linkssteuerung oder auch mit Mittelsteuerung verwendbar ist. Eine Verstärkung dieses Querträgers nach unten zum Fahrzeugboden oder zu einem unterhalb der Windschutzscheibe verlaufenden Querträger ist nicht vorgesehen. Das Armaturenbrett ist mit Ausnahme der vorher erwähnten Steuereinheit, von der es getrennt angeordnet ist, in üblicher Weise ausgebildet und verkleidet.

Aus der FR-PS 1 387 206 schließlich ist es bekannt, der Lenksäule ein Gehäuse für ein sogenanntes Kombiinstrument zuzuordnen, so daß der Fahrer die für seine Fahrt wesentlichen Daten unmittelbar vor sich ablesen kann.

Der Erfindung liegt die Aufgabe zugrunde, eine Lenkungsaufhängung der eingangs genannten Art so auszubilden, daß zumindest zum Teil der aufwendige Montagevorgang für die Verkleidung der Traganordnung entfallen kann.

Ausgehend von der Idee, daß man sowohl die Verbindungsstrebe als auch die Vertikalstrebe z.B. aus Metallguß formschön und stabil gestalten kann, so daß sie unmittelbar vom Fahrgastraum aus sichtbar sind, besteht die Erfindung bei einer Lenkungsaufhängung der eingangs genannten Art darin, daß die Verbindungsstrebe als eine tragende Hutze ausgebildet ist, die das Kombiinstrument o.dgl. in einer vorderen Abschlußwand aufnimmt und, ebenso wie die Vertikalstrebe, einen vom Fahrgastraum aus sichtbaren Bestandteil des Armaturenbrettes bildet, der mit einer keine Verkleidung erfordernden Oberfläche versehen ist. Durch diese Ausgestaltung braucht im Bereich der Lenksäule kein gesondertes Gehäuse für das Kombiinstrument aufgesetzt zu werden. Auch eine Verkleidung des Armaturenbrettes kann in diesem Bereich entfallen. Das gilt auch für die Vertikalstrebe, die in Weiterbildung der Erfindung beispielsweise mit einer Aufnahmeeinrichtung für ein Radio oder ein Telefon versehen sein kann und damit unmittelbar eine Funktion übernimmt, die sonst von der Verkleidung oder Mittelkonsole übernommen hätte werden müssen. Trotzdem erfüllen sowohl die tragende Hutze wie auch die Vertikalstrebe ihre auch beim Stand der Technik vorgesehene Tragfunktion.

Die Erfindung ist anhand eines Ausführungsbeispieles in der Zeichnung dargestellt und wird im folgenden erläutert. Es zeigen:
- Fig. 1: eine schematische, perspektivische Teildarstellung der für die Lenkungsaufhängung vorgesehenen Tragkonstruktion,
- Fig. 2: die schematische Darstellung eines Längsschnittes durch die Ausführungsform der Figur 1,
- Fig. 3: eine Teildarstellung einer Vertikalstrebe ähnlich jener, die bei der Ausführungsform der Figur 1 verwendet wurde, jedoch in einer anderen Ausführungsform, und
- Fig. 4: eine Vertikalstrebe ähnlich Figur 3, jedoch in einer weiteren Ausführungsform.

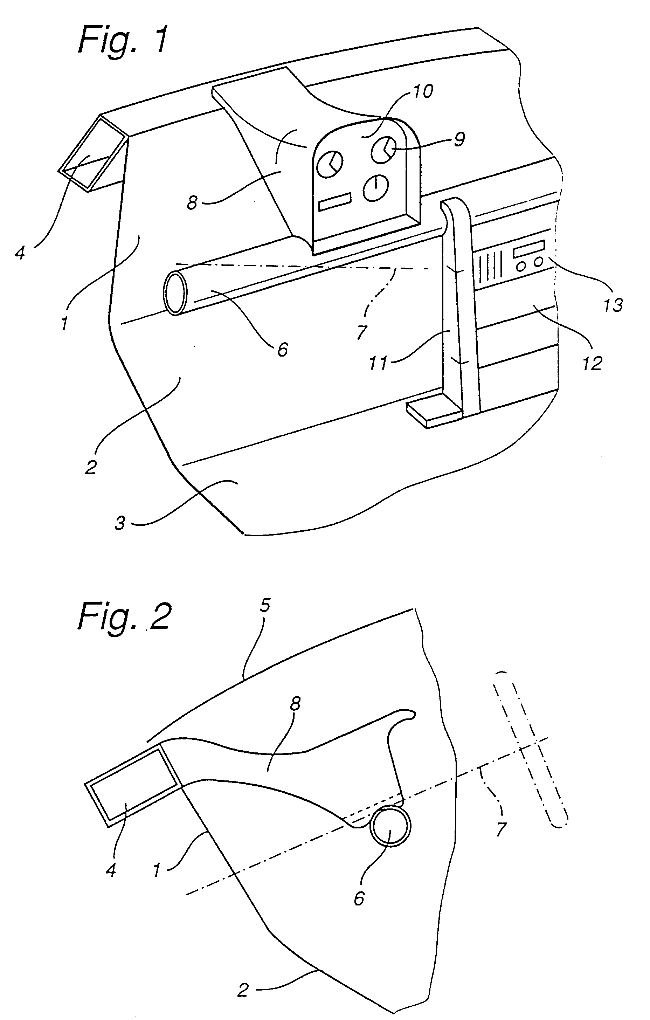

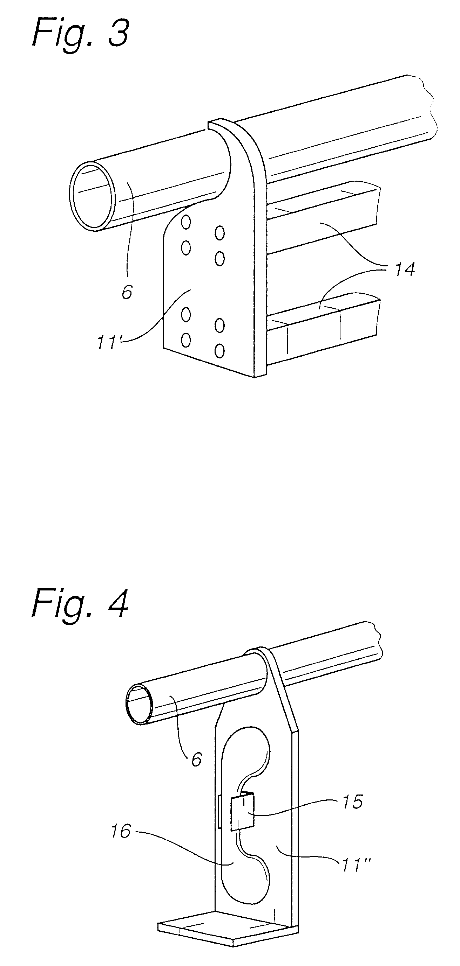

In den Figuren 1 und 2 ist schematisch ein Teil der vorderen Begrenzung des Fahrgastraumes eines Personenkraftwagens gezeigt, die aus der vorderen Stirnwand (1) einer den Fußraum begrenzenden Wand (2) und dem daran angrenzenden Boden (3) des Fahrgastraumes besteht. Die Stirnwand (1) ist oben an einem Querträger (4) befestigt, der in nicht näher dargestellter Weise mit den beiden A-Säulen der Fahrzeugkarosserie verbunden und unterhalb der aus Figur 2 ersichtlichen Windschutzscheibe (5) angeordnet ist. Im Abstand vor der Stirnwand (1) verläuft ein Querträger (6) in der Form eines Rohres, an dem die Lenksäule (7) des Fahrzeuges befestigt ist, die in den Figuren 1 und 2 strichpunktiert angedeutet ist. Dieser, die Lenksäule (7) haltende Träger (6) ist zum vorderen Querträger (4) hin mit einer Verbindungsstrebe in der Form einer tragenden Hutze (8) versehen, die in nicht näher dargestellter Weise mit dem Querträger (4) und dem Querträger (6) verschraubt oder in anderer Weise verbunden sein kann. Diese Hutze (8) kann beispielsweise aus einem Metallguß hergestellt und so gestaltet sein, daß sie die notwendige Abstützkraft für den Träger (6) aufbringen kann. Sie ist außerdem in der Form eines Gehäuses gestaltet, das an der dem Fahrer zugewandten Seite unmittelbar als Sichtfläche und als Teil des aus Gründen der Klarheit nicht dargestellten Armaturenbrettes dient und mehrere Anzeigeinstrumente (9) oder auch ein Kombiinstrument in einer vorderen Abschlußwand (10) aufnehmen kann. Dem die Abschlußwand (10) umgebenden Bereich der Hutze (8) kann sich dann in bekannter Weise eine Verkleidung anschließen.

Dies gilt auch für den Bereich der Vertikalstrebe (11), mit der der Querträger (6) etwa in der Fahrzeugmitte am Boden (3) abgestützt ist. Diese Vertikalstrebe kann ebenfalls so gestaltet werden, daß sie einen Teil der dem Innenraum zugewandten Vorderwand bildet. Beim Ausführungsbeispiel der Figur 1 kann die Vertikalstrebe mehrere Fächer (12) beispielsweise zur Aufnahme eines Radios (13) oder eines Ablagefaches bilden. Sie übt dennoch ihre Abstützfunktion aus. Es ist ohne weiteres möglich, die zum Fahrgastraum hin weisende sichtbare Seite der Vertikalstrebe (11) oder auch die sichtbare Hutze (8) mit einer solchen Oberfläche zu versehen, daß weder eine Nachbearbeitung noch eine Verkleidung notwendig wird.

Die Figur 3 zeigt eine Variante der Vertikalstrebe (11'), bei der ein stabiler Abstützfuß gebildet ist, an dem Ablagefächer (14) angebracht sind.

Die Figur 4 schließlich zeigt eine Variante, bei der die Vertikalstrebe (11'') mit einer Klemmhalterung (15) zur Aufnahme eines Telefons (16) ausgerüstet ist. In diesem Fall braucht die Verkleidung nur den Träger (6) zu überdecken. Die Vertikalstrebe (11'') wird so gestaltet, wie auch die Vertikalstrebe (11') der Figur 3, daß sie ein formschönes Aussehen hat und keiner weiteren Nacharbeit mehr bedarf.

## Patentansprüche

1. Lenkungsaufhängung für Kraftfahrzeuge, insbesondere Personenkraftwagen, bestehend aus einem zwischen den A-Säulen verlaufenden Querträger, der an einem unter der Windschutzscheibe verlaufenden Querträger (4) über eine Verbindungsstrebe (8) und am Boden über eine Vertikalstrebe (11, 11', 11'') abgestützt und durch ein Armaturenbrett mit einer ein Kombiinstrument o.dgl. aufnehmenden Instrumententafel zum Fahrgastraum hin abgedeckt ist,
**dadurch gekennzeichnet, daß**
die Verbindungsstrebe als eine tragene Hutze (8) ausgebildet ist, die das Kombiinstrument o.dgl. in einer vorderen Abschlußwand (10) aufnimmt und, ebenso wie die Vertikalstrebe (11, 11', 11'') einen vom Fahrgastraum aus sichtbaren Bestandteil des Armaturenbrettes bildet, der mit einer keine Verkleidung erfordernden Oberfläche versehen ist.

2. Lenkungsaufhängung nach Anspruch 1,
**dadurch gekennzeichnet, daß**
die Vertikalstrebe (11, 11') mit einer Aufnahmeeinrichtung für ein Radio (13), ein Telefon (16) oder ähnliche Zubehörteile versehen ist.

3. Lenkungsaufhängung nach Anspruch 1,
**dadurch gekennzeichnet, daß**
die Vertikalstrebe (11') mit Ablagefächern (14) versehen ist.

## Claims

1. A steering suspensions for motor vehicles, in particular passenger vehicles, consisting of a cross member which runs between the A pillars and is supported on a cross member (4) which runs under the windscreen by means of a connecting strut (8) and on the floor by means of a vertical strut (11, 11', 11'') and which is concealed from the passenger compartment by means of a dashboard with an instrument panel containing an instrument cluster or similar,
**characterised in that,**
the connecting strut is designed as a supporting casing (8) which contains the instrument cluster or similar in its front face (10) and, like the vertical strut (11, 11', 11''), forms part of the dashboard which is visible to the passenger compartment and is fitted with a surface which requires no trim.

2. A steering suspension in accordance with Claim 1,
**characterised in that,**
the vertical strut (11, 11') is fitted with a compartment for a radio (13) or a holder for a telephone (16) or similar accessories.

3. A steering suspension in accordance with Claim 1,
**characterised in that,**
the vertical strut (11') is provided with storage compartments (14).

## Revendications

1. Montage de support de colonne de direction pour véhicules automobiles, notamment pour des voitures de tourisme, constitué d'une traverse s'étendant entre les montants A, qui s'appuie sur une traverse (4) s'étendant sous le pare-brise, par l'intermédiaire d'une entretoise de liaison (8), et sur le sol, par l'intermédiaire d'une entretoise verticale (11, 11', 11''), et qui est recouverte en direction de l'habitacle du véhicule par une planche de bord comprenant un tableau de bord recevant une instrumentation combinée ou analogue, **caractérisé** en ce que l'entretoise de liaison est réalisée en tant que coiffe porteuse (8), qui reçoit l'instrumentation combinée ou similaire dans une paroi de fermeture avant (10), et forme, tout comme l'entretoise verticale (11, 11', 11''), une partie intégrante de la planche de bord, visible à partir de l'habitacle du véhicule et dotée d'un état de surface ne nécessitant pas de garniture de revêtement.

2. Montage de support de colonne de direction selon la revendication 1, **caractérisé** en ce que l'entretoise verticale (11, 11') est munie d'un dispositif de réception pour un poste radio (13), un téléphone (16) ou d'autres accessoires similaires.

3. Montage de support de colonne de direction selon la revendication 1, **caractérisé** en ce que l'entretoise verticale (11'') est munie de vide-poches (14).
